# EUROPEAN PATENT APPLICATION

(11) **EP 4 509 807 A1**
(43) Date of publication of application: **19.02.2025**
(21) Application number: 23807216.9
(22) Date of filing: 06.01.2023
(51) Int. Cl.: G01J 5/00, C21D 1/00, C21D 9/00

(54) **TEMPERATURE MEASUREMENT METHOD, TEMPERATURE MEASUREMENT DEVICE, TEMPERATURE CONTROL METHOD, TEMPERATURE CONTROL DEVICE, STEEL MATERIAL MANUFACTURING METHOD, AND STEEL MATERIAL MANUFACTURING EQUIPMENT**

(30) Priority: 19.05.2022 JP 2022082392
(71) Applicant: JFE Steel Corporation, Tokyo 100-0011 (JP)
(72) Inventor: KEMMOCHI, Mitsutoshi, Tokyo 100-0011 (JP); OGASAHARA, Tomoyoshi, Tokyo 100-0011 (JP)
(74) Representative: Hoffmann Eitle
(86) International application number: PCT/JP2023/000178
(87) International publication number: WO 2023/223598

(57) **Abstract**

A temperature measurement method according to the present invention includes: a spectral measurement step of measuring a spectral radiation spectrum from a slab including at least three or more wavelengths having different spectral emissivity at a same temperature; an acquisition step of acquiring a feature quantity of a surface of the slab at a measurement point of the spectral radiation spectrum; a determination step of determining a form of the surface of the slab based on the feature quantity acquired in the acquisition step; and a selection step of selecting a temperature calculation method for calculating a temperature of the measurement point from the spectral radiation spectrum, measured in the spectral measurement step, based on a result of the determination in the determination step.

## Description

### Field

The present invention relates to a temperature measurement method, a temperature measurement apparatus, a temperature control method, a temperature control apparatus, a method for manufacturing a steel material, and a facility for manufacturing a steel material.

### Background

Generally, a slab subjected to hot rolling is heated to a target extraction temperature in a heating furnace before being subjected to hot rolling. Therefore, it is necessary to uniformly heat the slab in the heating furnace so that the slab is heated to the target extraction temperature, and thus necessary to monitor the inside temperature of the heating furnace and the extraction temperature of the slab as needed. Meanwhile, by accurately comprehending the extraction temperature of the slab in the heating furnace, the prediction accuracy of a temperature prediction model for predicting the temperature of the slab is improved, which is useful for improving the accuracy of the extraction temperature of the slab in the heating furnace and the operation of the heating furnace. Against such a background, many methods for measuring the extraction temperature of a slab in a heating furnace have been proposed. In addition, since it is difficult to accurately measure the temperature of a slab when scale is formed on the surface of the slab, Patent Literatures 1 and 2 propose a method for determining whether the scale is formed on the surface of the slab. Specifically, Patent Literature 1 describes a method for determining whether scale is formed by determining whether or not a difference between a heating furnace extraction temperature calculated from the operating condition of a heating furnace and a maximum value of the heating furnace extraction temperature actually measured is a positive threshold or less. In addition, Patent Literature 2 describes a method for determining whether scale is formed based on the temperature of a slab at a position where scale is removed and the temperature of the slab at a position where the scale is not removed.

### Citation List

### Patent Literature

Patent Literature 1: JP 2019-167574 A
Patent Literature 2: JP 2017-1070 A
Patent Literature 3: JP 5987563 B2

### Summary

### Technical Problem

However, in the method described in Patent Literature 1, it is difficult to determine whether scale is formed when there is a gap between the calculation condition and the measurement state of the heating furnace extraction temperature, such as when the conveyance of the slab is stopped after the slab is extracted from the heating furnace due to an operational trouble or the like. In addition, when scale exists across the entire temperature measurement range of the slab, a measurement error may occur in the maximum value of the heating furnace extraction temperature. On the other hand, in the method described in Patent Literature 2, since it is necessary to measure the temperature of the slab before and after the scale removal step, there are problems that multiple devices are required and an environment for installing such devices cannot be prepared, for example. In addition, when there is water on the slab due to water used for the scale removal position in the scale removal step, a measurement error may occur in the temperature of the slab. For these reasons, a technique capable of accurately measuring the extraction temperature of a slab in the heating furnace regardless of the form of the surface of the slab has been requested.

The present invention has been made in view of the above problems, and an object thereof is to provide a temperature measurement method and a temperature measurement apparatus capable of accurately measuring the temperature of a slab regardless of the form of the surface of the slab. In addition, another object of the present invention is to provide a temperature control method and a temperature control apparatus capable of accurately controlling the temperature of a slab to a target temperature regardless of the form of the surface of the slab. Further, still another object of the present invention is to provide a method and a facility for manufacturing a steel material capable of improving yield of manufacturing the steel material and preventing a facility trouble due to warpage or bumping of the steel material and a facility damage trouble due to an excessive burden such as a load.

### Solution to Problem

(1) To solve the problem and achieve the object, a temperature measurement method according to the present invention includes: a spectral measurement step of measuring a spectral radiation spectrum from a slab including at least three or more wavelengths having different spectral emissivity at a same temperature; an acquisition step of acquiring a feature quantity of a surface of the slab at a measurement point of the spectral radiation spectrum; a determination step of determining a form of the surface of the slab based on the feature quantity acquired in the acquisition step; and a selection step of selecting a temperature calculation method for calculating a temperature of the measurement point from the spectral radiation spectrum, measured in the spectral measurement step, based on a result of the determination in the determination step.
(2) Moreover, in the temperature measurement method according to above (1), the feature quantity may include luminance and a shape.
(3) Moreover, in the temperature measurement method according to above (1) or (2), the form of the surface of the slab may include scale and water on the slab.
(4) Moreover, a temperature measurement apparatus according to the present invention includes: a spectral measurement unit that measures a spectral radiation spectrum from a slab including at least three or more wavelengths having different spectral emissivity at a same temperature; an acquisition unit that acquires a feature quantity of a surface of the slab at a measurement point of the spectral radiation spectrum; and an arithmetic device that determines a form of the surface of the slab based on the feature quantity acquired by the acquisition unit, and selects a temperature calculation method for calculating a temperature of the measurement point from the spectral radiation spectrum, based on a result of the determination.
(5) Moreover, a temperature control method according to the present invention includes a step of controlling a temperature of a slab based on a temperature at a measurement point calculated by a temperature calculation method selected by the temperature measurement method according to any one of above (1) to (3).
(6) Moreover, a temperature control apparatus according to the present invention includes a unit that controls a temperature of a slab based on a temperature at a measurement point calculated by a temperature calculation method selected by the temperature measurement apparatus according to above (4).
(7) Moreover, a method for manufacturing a steel material according to the present invention, includes a step of controlling a temperature of a slab using the temperature control method according to above (5).
(8) Moreover, a facility for manufacturing a steel material according to the present invention, includes the temperature control apparatus according to above (6). Advantageous Effects of Invention

According to the temperature measurement method and the temperature measurement apparatus according to the present invention, it is possible to accurately measure the temperature of a slab regardless of the form of the surface of the slab. In addition, according to the temperature control method and the temperature control apparatus according to the present invention, it is possible to accurately control the temperature of a slab to a target temperature regardless of the form of the surface of the slab. Further, according to the method and the facility for manufacturing a steel material according to the present invention, it is possible to improve yield of manufacturing the steel material, and to prevent a facility trouble due to warpage or bumping of the steel material and a facility damage trouble due to an excessive burden such as a load.

### Brief Description of Drawings

FIG. 1 is a schematic diagram illustrating a configuration of a facility for manufacturing a hot-rolled steel sheet to which a temperature measurement method, a temperature measurement apparatus, a temperature control method, and a temperature control apparatus according to an embodiment of the present invention are applied.
FIG. 2 is a schematic diagram illustrating a configuration of the temperature measurement apparatus according to the embodiment of the present invention.
FIG. 3 is a schematic diagram illustrating an example of an imaging range of a spectral image.
FIG. 4 is a diagram illustrating an example of a spectral image and a spectral radiation spectrum.
FIG. 5 is a diagram illustrating an operation of a feature quantity measurement device.
FIG. 6 is a flowchart illustrating a flow of temperature measurement processing according to the embodiment of the present invention.
FIG. 7 is a diagram illustrating an example of the temperature measurement processing illustrated in FIG. 6.
FIG. 8 is a diagram illustrating another example of the temperature measurement processing illustrated in FIG. 6.
FIG. 9 is a diagram illustrating an example of image data of a slab.
FIG. 10 is a diagram illustrating a region where luminance extracted from the image data illustrated in FIG. 9 is equal to or less than a threshold.
FIG. 11 is a diagram illustrating an example of the image data of the slab.
FIG. 12 is a diagram illustrating regions where luminance extracted from the image data illustrated in FIG. 11 is equal to or less than the threshold.
FIG. 13 is a diagram illustrating an example of the image data of the slab.
FIG. 14 is a diagram illustrating regions where luminance extracted from the image data illustrated in FIG. 13 is equal to or less than the threshold.

### Description of Embodiments

Hereinafter, a temperature measurement method, a temperature measurement apparatus, a temperature control method, and a temperature control apparatus according to an embodiment of the present invention will be described with reference to the drawings.

### [Facility for Manufacturing Hot-rolled Steel Sheet]

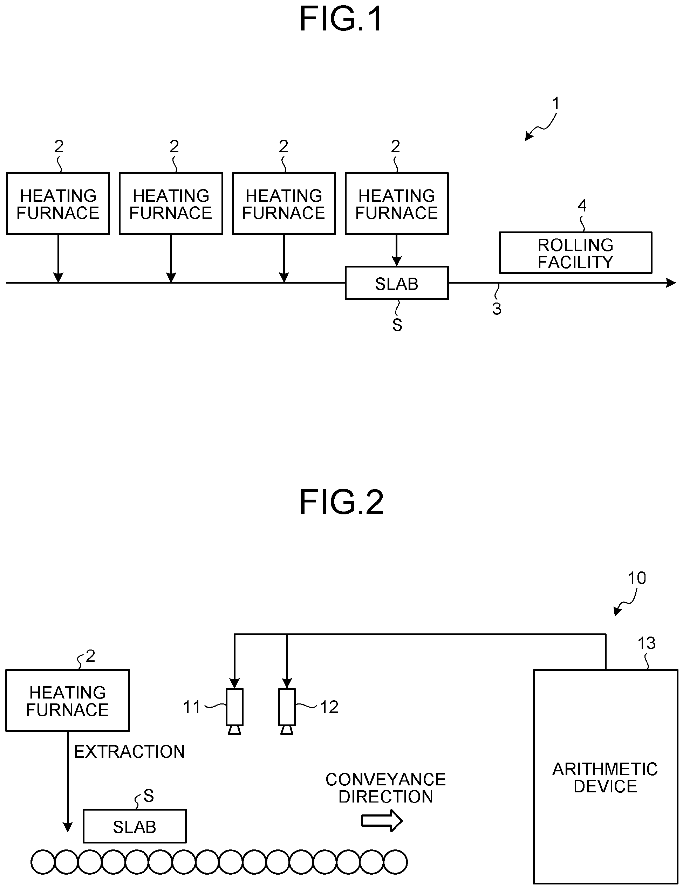

First, with reference to FIG. 1, a description will be given of a configuration of a facility for manufacturing a hot-rolled steel sheet to which the temperature measurement method, the temperature measurement apparatus, the temperature control method, and the temperature control apparatus according to the embodiment of the present invention are applied.

FIG. 1 is a schematic diagram illustrating the configuration of the facility for manufacturing a hot-rolled steel sheet to which the temperature measurement method, the temperature measurement apparatus, the temperature control method, and the temperature control apparatus according to the embodiment of the present invention are applied. As illustrated in FIG. 1, a facility 1 for manufacturing a hot-rolled steel sheet includes: multiple heating furnaces 2 that are provided in parallel; a conveyance line 3; and a rolling facility 4 that has a roughing mill, a finishing mill, a runout table, a coiler, and the like. In this manufacturing facility 1, a slab S is heated to a target temperature in the heating furnaces 2 and then extracted from any of the multiple heating furnaces 2 to the conveyance line 3. Then, the slab S is conveyed to the rolling facility 4 via the conveyance line 3 to be subjected to hot rolling in the rolling facility 4.

### [Temperature Measurement Apparatus]

Next, the configuration of the temperature measurement apparatus according to the embodiment of the present invention will be described with reference to FIGS. 2 to 5.

FIG. 2 is a schematic diagram illustrating the configuration of the temperature measurement apparatus according to the embodiment of the present invention. As illustrated in FIG. 2, a temperature measurement apparatus 10 according to the embodiment of the present invention includes: a spectral camera 11; a feature quantity measurement device 12; and an arithmetic device 13.

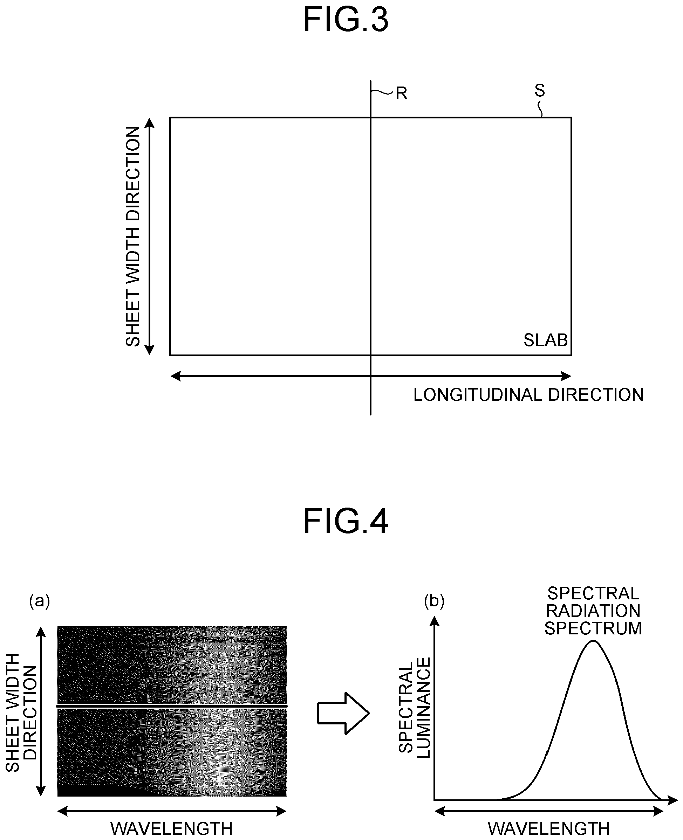

The spectral camera 11 measures a spectral radiation spectrum (relationship between wavelength and spectral luminance) of the slab S by capturing a spectral image of the slab S extracted from the heating furnace 2, and outputs data of the measured spectral radiation spectrum to the arithmetic device 13. The spectral camera 11 corresponds to a spectral measurement unit. When an imaging range of a spectral image is linear, the spectral camera 11 may be installed so as to capture a spectral image of a region R in the sheet width direction from above the slab S as illustrated in FIG. 3. As a result, by conveying the slab S along the conveyance line 3, it is possible to capture a spectral image of the entire surface of the slab S.

FIGS. 4(a) and 4(b) illustrate an example of a spectral image and a spectral radiation spectrum of the slab S. In the case of the example illustrated in FIGS. 4(a) and 4(b), since the imaging range of the spectral camera 11 is the sheet width direction of the slab S, the lateral direction of the spectral image corresponds to measurement points on the slab S, and the spectral radiation spectrum (FIG. 4(b)) at each measurement point on the slab S is measured. A spectral emissivity spectrum can be calculated from the spectral radiation spectrum by acquiring reference data in advance in a blackbody furnace or the like and setting the calculation temperature of operational data to be positive, for example. Further, by setting the spectral emissivity serving as a reference such as the spectral emissivity in a portion where scale is detached, variation of the spectral emissivity spectrum can also be calculated.

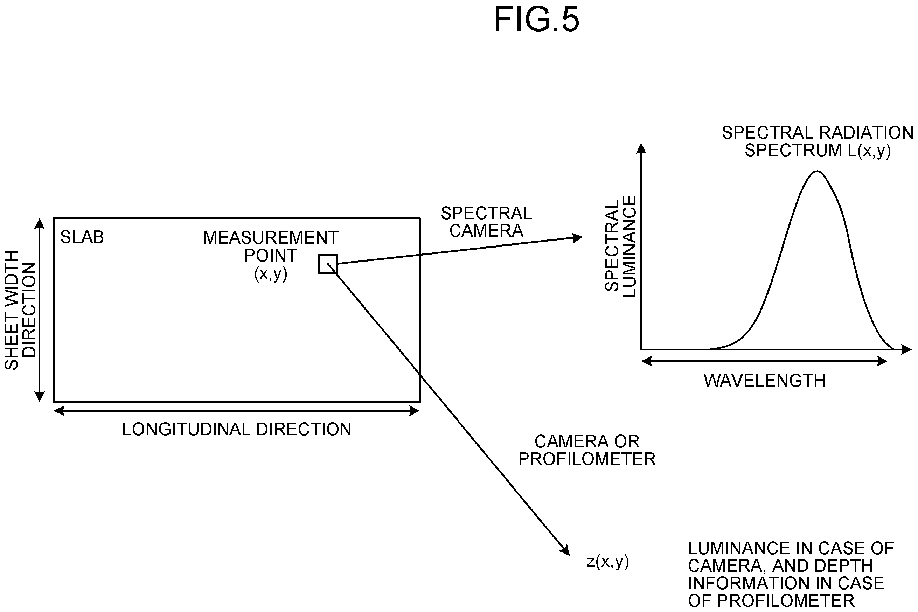

The feature quantity measurement device 12 is constituted of a camera, a profilometer, and the like, and measures the feature quantity of the surface of the slab S at a measurement point where a spectral reflection spectrum is measured by the spectral camera 11. Examples of the feature quantities measured by the feature quantity measurement device 12 include the luminance, the shape, and the depth of a surface region including the measurement point, the position in the plane of the slab, the position on the conveyance line 3. Meanwhile, examples of the feature quantities measured by the feature quantity measurement device 12 include the lengths in the width direction and the longitudinal direction of the surface region including the measurement point, an aspect ratio, and a maximum value of the length. More specifically, as illustrated in FIG. 5, at each measurement point (x, y) on the slab, a spectral radiation spectrum L(x, y) is measured by the spectral camera 11, and a feature quantity z(x, y) is measured by the feature quantity measurement device 12. The spectral radiation spectrum L(x, y) is a scalar quantity including spectral luminance of multiple wavelengths. In a case where the feature quantity measurement device 12 is a camera, the feature quantity z(x, y) corresponds to luminance, and in a case where the feature quantity measurement device 12 is a profilometer, the feature quantity z(x, y) corresponds to depth information. Further, the feature quantity z(x, y) may be a scalar quantity, or may be a vector having three values of RGB in a case where the feature quantity measurement device 12 is a color camera.

The arithmetic device 13 calculates the temperature of the slab S by executing temperature measurement processing to be described later using the spectral radiation spectrum measured by the spectral camera 11 and the feature quantity of the surface of the slab S measured by the feature quantity measurement device 12. The arithmetic device 13 may calculate the temperature of the slab S from the spectral emissivity calculated from the spectral radiation spectrum or the variation thereof.

### [Temperature Measurement Processing]

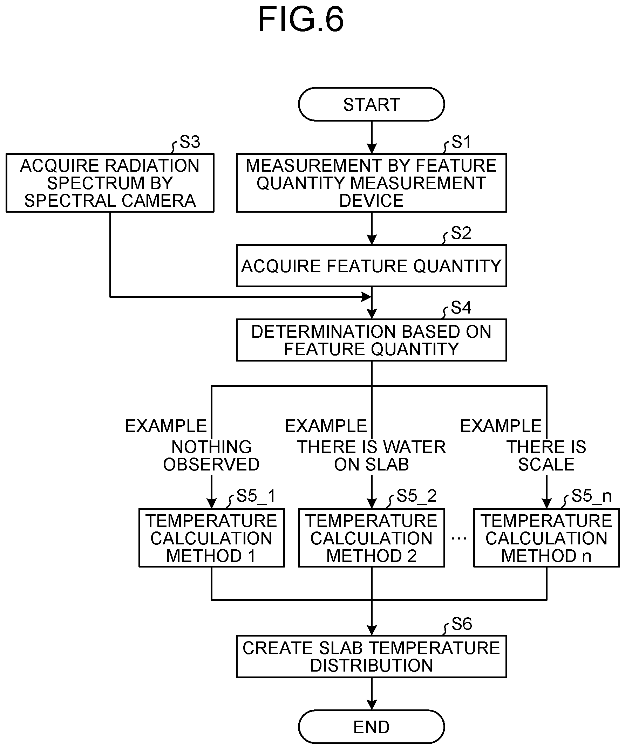

Next, a flow of the temperature measurement processing according to the embodiment of the present invention will be described with reference to FIG. 6.

FIG. 6 is a flowchart illustrating the flow of the temperature measurement processing according to the embodiment of the present invention. The flowchart illustrated in FIG. 6 starts at a timing when an execution command of the temperature measurement processing is input to the arithmetic device 13, and the temperature measurement processing proceeds to processing of Step S1.

In the processing of Step S1, the arithmetic device 13 causes the feature quantity measurement device 12 to measure the feature quantity of each measurement point. In processing of Step S2, the arithmetic device 13 acquires a predetermined feature quantity for each measurement point from the measurement result obtained by the processing of Step S1 (acquisition step). Meanwhile, in processing of Step S3, the arithmetic device 13 causes the spectral camera 11 to measure the spectral radiation spectrum of each measurement point. Then, the arithmetic device 13 acquires the spectral radiation spectrum for each measurement point from the obtained measurement result (spectral measurement step). Processing of Step S4 is performed by the arithmetic device 13 using the spectral radiation spectrum acquired in the spectral measurement step S3 and the acquisition step S2 and the predetermined feature quantity.

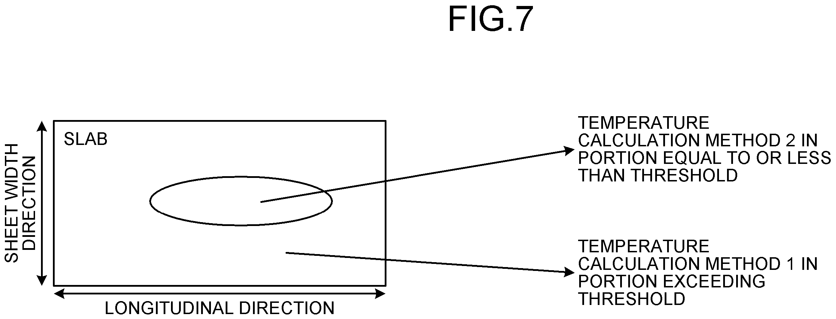

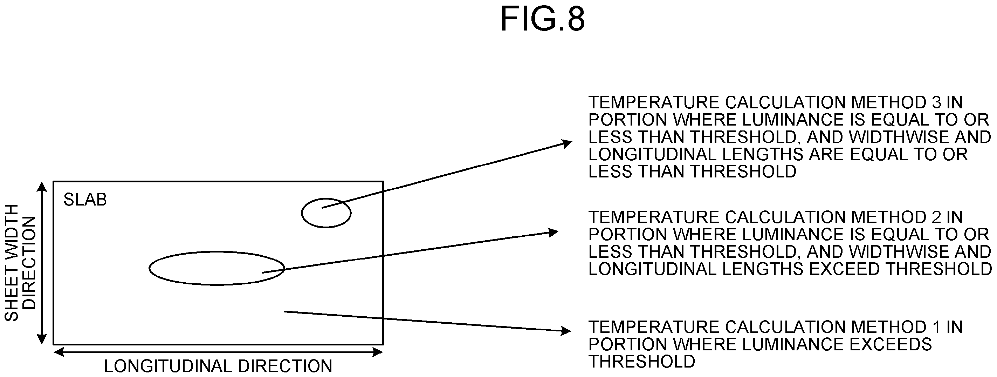

In the processing of Step S4, the arithmetic device 13 determines the form of the surface of the slab S at the measurement point of the spectral radiation spectrum based on the feature quantity of the surface of the slab S measured by the feature quantity measurement device 12. Specifically, the arithmetic device 13 determines whether there is scale or water on the slab at the measurement point of the spectral radiation spectrum based on the feature quantity of the surface of the slab S measured by the feature quantity measurement device 12. For example, as illustrated in FIG. 7, when the measurement point of the spectral radiation spectrum is included in an image region where the luminance exceeds the threshold, the arithmetic device 13 determines that the slab S is exposed at the measurement point. On the other hand, when the measurement point of the spectral radiation spectrum is included in an image region where the luminance is equal to or less than the threshold, the arithmetic device 13 determines that there is water on the slab at the measurement point. In addition, as illustrated in FIG. 8, when the measurement point of the spectral radiation spectrum is included in the image region where the luminance exceeds the threshold, the arithmetic device 13 determines that the slab S is exposed at the measurement point. On the other hand, when the measurement point of the spectral radiation spectrum is included in an image region where the luminance is equal to or less than the threshold and the lengths in the width direction and the longitudinal direction exceed a threshold, the arithmetic device 13 determines that there is water on the slab at the measurement point. Meanwhile, when the measurement point of the spectral radiation spectrum is included in an image region where the luminance is equal to or less than the threshold and the lengths in the width direction and the longitudinal direction are equal to or less than the threshold, the arithmetic device 13 determines that there is scale at the measurement point. As a result, the processing of Step S4 is completed, and the temperature measurement processing proceeds to processing of Steps S5_1 to S5_n (here, for example, n≥3).

In the processing of Steps S5_1 to S5_n, the arithmetic device 13 selects a temperature calculation method for calculating the temperature of the measurement point based on the form of the surface of the slab S at the measurement point determined in the processing of Step S4, and calculates the temperature of the measurement point using the selected temperature calculation method. For example, if it is determined that there is no scale or water on the slab at the measurement point, the arithmetic device 13 calculates the spectral emissivity of the slab S at a predetermined wavelength from the spectral reflection spectrum, and calculates the temperature at the measurement point using the calculated spectral emissivity and the spectral emissivity at a predetermined wavelength assumed in advance (Step S5_1: Temperature calculation method 1). Meanwhile, if it is determined that there is water on the slab at the measurement point, the arithmetic device 13 calculates the spectral emissivity of the slab S at a wavelength that is preset from the spectral reflection spectrum at the measurement point and is not susceptible to emissivity variation due to water on the slab, and calculates a temperature at the measurement point using the calculated spectral emissivity (Step S5_2, Temperature calculation method 2). Meanwhile, if it is determined that there is scale at the measurement point, the arithmetic device 13 calculates the spectral emissivity of the slab S at a wavelength that is preset from the spectral reflection spectrum at the measurement point and is not susceptible to emissivity variation due to scale, and calculates a temperature at the measurement point using the calculated spectral emissivity (Step S5_n, Temperature calculation method n). The arithmetic device 13 may calculate a temperature measurement value less affected by emissivity variation by using a method using the principal constituent described in Patent Literature 3.

In the processing of Step S5_1, the temperature may be calculated by a monochromatic radiation thermometer method in which the temperature is calculated from the Planck's emissivity using an emissivity ε defined in advance based on the luminance of one specified wavelength λ. In the processing of Step S5_2, the temperature may be calculated by a two-color thermometer method in which the temperature is calculated from the Planck's emissivity using an emissivity ratio ε1/ε2 defined in advance based on the luminance of two specified wavelengths λ1 and λ2. In the processing of Step S5_n, the temperature may be calculated by the method described in Patent Literature 3. In addition, the temperature may be calculated by the monochromatic radiation thermometer method using the wavelength λ1 in the processing of Step S5_1, the temperature may be calculated by the monochromatic radiation thermometer method using the wavelength λ2 in the processing of Step S5_2, and the temperature may be calculated by the monochromatic radiation thermometer method using a wavelength λ3 in the processing of Step S5_n. In other words, a temperature calculation method with a small error may be selected for each of different cases of the processing in Steps S5_1 to S5_n. In addition, in the present embodiment, the temperature calculation method for calculating the temperature of the measurement point is selected based on the form of the surface of the slab S at the measurement point determined in the processing of Step S4, and the temperature of the measurement point is calculated using the selected temperature calculation method. However, the temperature of the measurement point may be calculated in advance using all the temperature calculation methods (Steps S5_1 to S5_n) without performing the determination in the processing of Step 4, and then an appropriate temperature may be selected from the temperatures calculated based on the determination result in the processing of Step S4. In other words, the order of the processing of Step S4 and Steps S5_1 to S5_n may be reversed, and the determination processing of Step S4 may be performed on each measurement point after the calculation using the temperature calculation methods 1 to n (Steps S5_1 to S5_n). The processing results of Steps S4 to S5_n described above may be stored and accumulated in a storage device (not illustrated). In this event, it is preferable to store and accumulate them with the position information, the time information, the material information, the manufacturing condition information, or the like of each measurement point in order to facilitate creation of a slab temperature distribution to be described later at a later date when necessary.

Thereafter, the arithmetic device 13 creates a slab temperature distribution from the results of the processing in Steps S1 to S5_n (Step S6). The slab temperature distribution is preferably created so as to be a region having a predetermined size. In addition, the created slab temperature distribution may be stored and accumulated in a storage device (not illustrated). In this event, it may be stored together with the position information, the time information, the material information, the manufacturing condition information, or the like of each measurement point. Further, it may be displayed on a display device (not illustrated). In this event, it may be displayed together with the position information, the time information, the material information, the manufacturing condition information, or the like of each measurement point. The size of the region and the output method may be appropriately selected according to the purpose of using the slab temperature distribution created in the present embodiment. As an example, n in the processing of Step S5 has been described as n≥3, but the present invention is not limited thereto. It is also possible to achieve the effect when n≥2. In the case of a slab, n≥3 is preferable.

As is clear from the above description, in the temperature measurement processing according to the embodiment of the present invention, the spectral camera 11 measures the spectral radiation spectrum from the slab including at least three or more wavelengths having different spectral emissivity at the same temperature, the feature quantity measurement device 12 acquires the feature quantity of the surface of the slab at the measurement point of the spectral radiation spectrum, the arithmetic device 13 determines the form of the surface of the slab based on the feature quantity acquired by the feature quantity measurement device 12 and calculates the temperature of the measurement point from the spectral radiation spectrum based on the determination result, so that the temperature of the slab can be accurately measured regardless of the form of the surface of the slab.

### Example

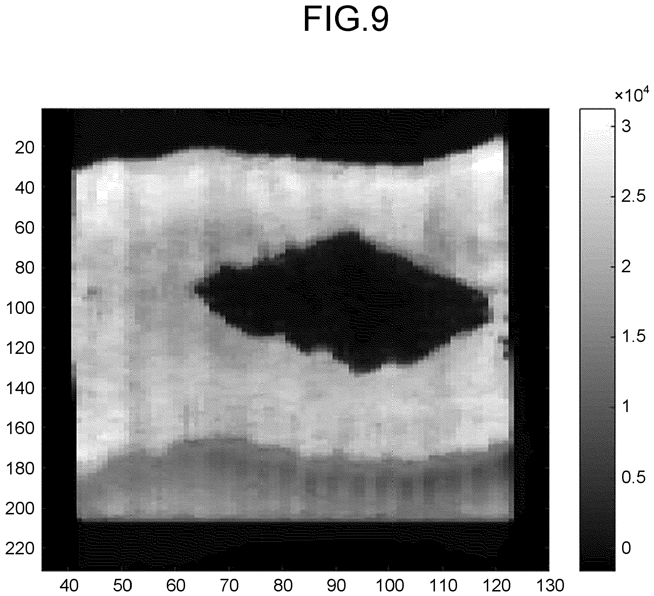

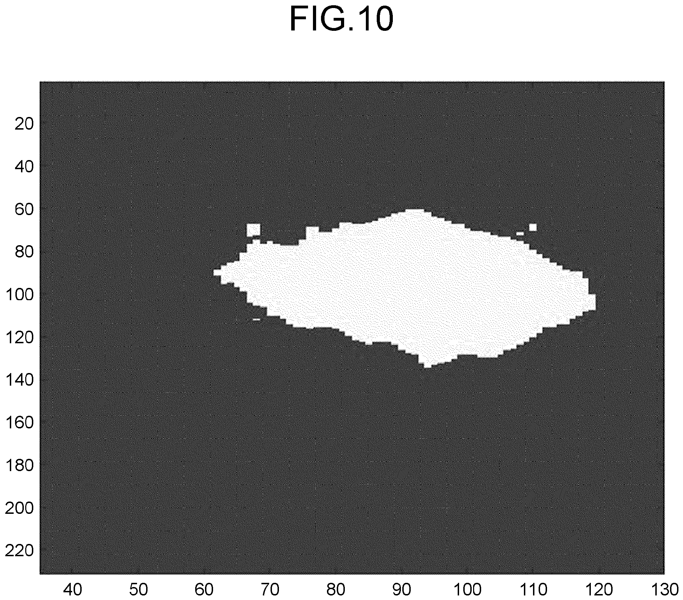

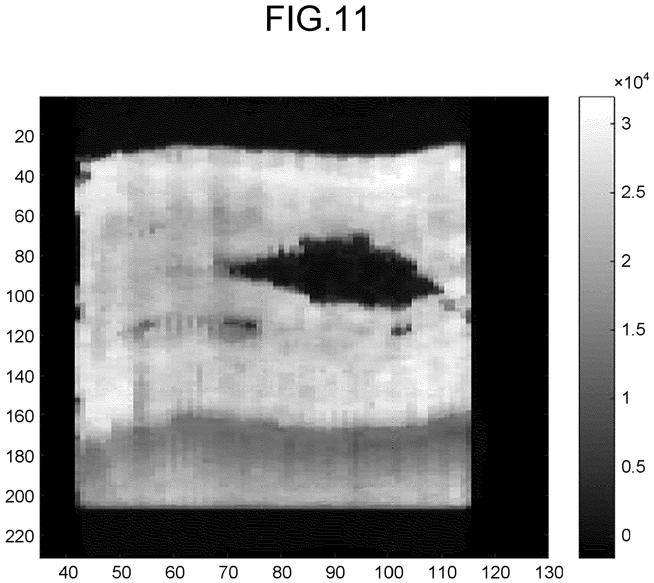

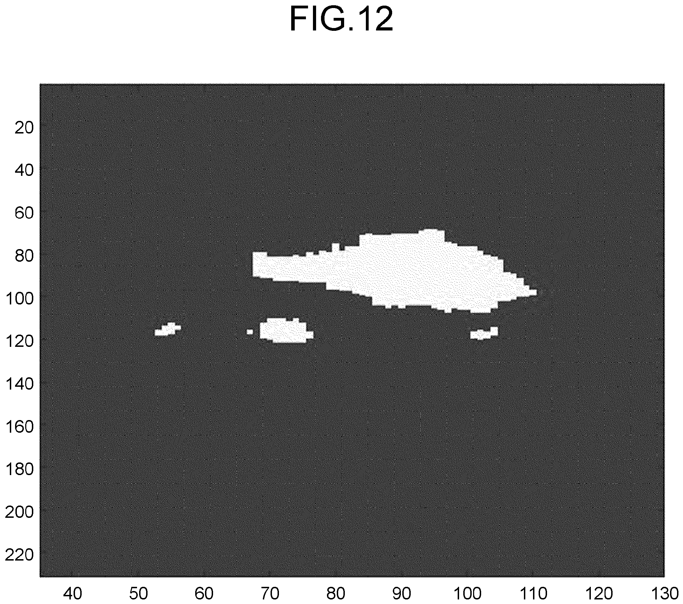

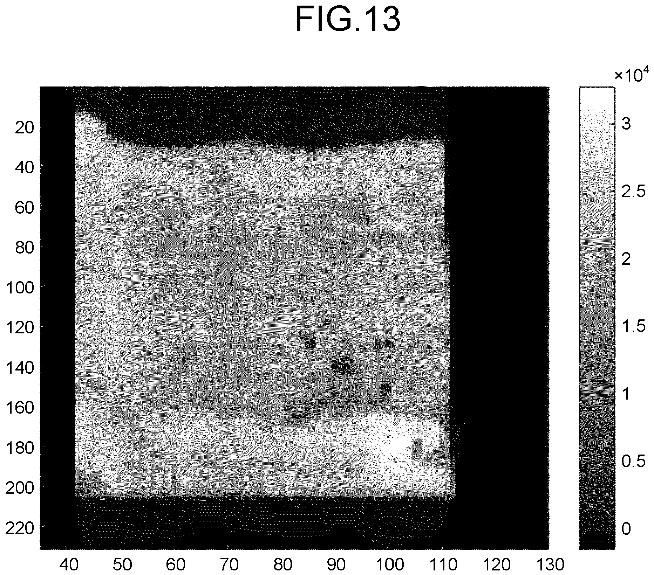

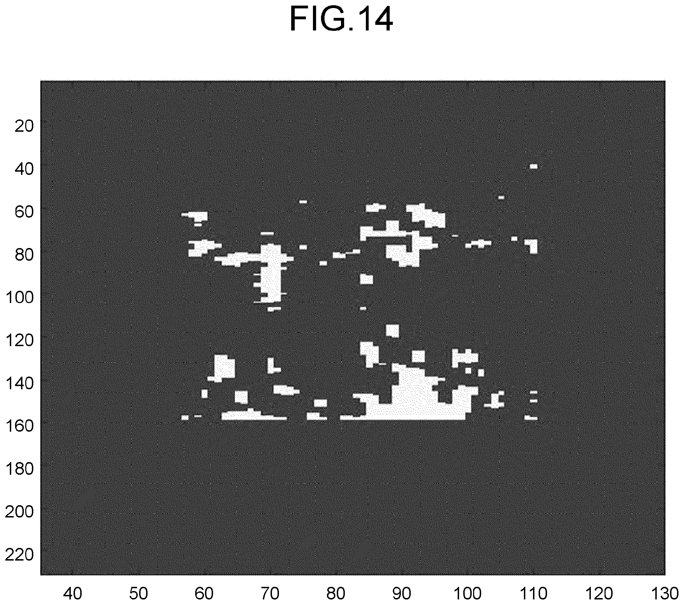

FIG. 9 illustrates an example of image data of the slab having water on its central portion. When the temperature distribution of the slab is calculated for such image data by one temperature calculation method as in the related art, resultant data is data in which the temperature decreases on the central portion. To deal with this, the portion with water on the slab was extracted by applying the threshold to the luminance of the image data. FIG. 10 illustrates an example in which a region where the luminance is equal to or less than the threshold was extracted with 1/2 of the maximum value of the luminance of the slab portion set as the threshold. As a result, it is possible to calculate the temperature with higher accuracy by changing the temperature calculation method between the extracted region and the other regions. However, it is not sufficient to apply the threshold only to the luminance. FIG. 11 illustrates image data of another slab, and FIG. 12 illustrates a region extracted from the image data illustrated in FIG. 11 with a similar threshold. The largest region illustrated in FIG. 12 is assumed to be a region with water on the slab, but besides multiple small regions assumed to be a scale region are also extracted. Therefore, the temperature calculation method may be changed among the region with water on the slab, the scale region, and other regions based on the size of each region. FIG. 13 illustrates image data of still another slab, and FIG. 14 illustrates regions extracted with a similar threshold. In this data, the region with water on the slab is not extracted, and the multiple small regions assumed as the scale regions are extracted. Accordingly, although the region with water on the slab and the scale region cannot be separated only by the threshold of the luminance, the temperature calculation method can be changed between the region with water on the slab and the scale region by providing the threshold for the lengths of the regions in the width direction and the longitudinal direction.

Although the embodiment to which the invention made by the present inventors is applied has been described above, the present invention is not limited by the description and drawings constituting a part of the disclosure of the present invention according to the present embodiment. For example, the spectral camera 11 may have the function of the feature quantity measurement device 12. In this case, the acquisition step S1 is also performed in the spectral measurement step S3. Meanwhile, the spectral reflection spectrum does not necessarily have to be in a continuous wavelength range, and is sufficient as long as it includes at least three or more wavelengths having different spectral emissivity at the same temperature. Meanwhile, in the present embodiment, it is determined both whether there is scale and/or whether there is water on the slab at the measurement point, but only one of whether there is scale and whether there is water on the slab at the measurement point may be determined. Meanwhile, for example, it is possible to improve yield of manufacturing the steel material by manufacturing the steel material while controlling the temperature of the slab using the temperature control method or the temperature control apparatus which is one embodiment of the present invention. Meanwhile, it is possible to improve yield of manufacturing the steel material by providing the temperature control method or the temperature control apparatus which is one embodiment of the present invention in a known or existing manufacturing facility, particularly a slab heating facility. It is also possible to prevent a facility trouble due to warpage or bumping of the steel material and a facility damage trouble due to an excessive burden such as a load. As described above, other embodiments, examples, operation techniques, and the like made by those skilled in the art and the like based on the present embodiment are all included in the scope of the present invention.

### Industrial Applicability

According to the present invention, it is possible to provide the temperature measurement method and the temperature measurement apparatus capable of accurately measuring the temperature of a slab regardless of the form of the surface of the slab. In addition, according to the present invention, it is possible to provide the temperature control method and the temperature control apparatus capable of accurately controlling the temperature of the slab to the target temperature regardless of the form of the surface of the slab. Further, according to the present invention, it is possible to provide the method and the facility for manufacturing a steel material capable of improving yield of manufacturing the steel material and preventing a facility trouble due to warpage or bumping of the steel material and a facility damage trouble due to an excessive burden such as a load.

### Reference Signs List

- 1: FACILITY FOR MANUFACTURING HOT-ROLLED STEEL SHEET
- 2: HEATING FURNACE
- 3: CONVEYANCE LINE
- 4: ROLLING FACILITY
- 10: TEMPERATURE MEASUREMENT APPARATUS
- 11: SPECTRAL CAMERA
- 12: FEATURE QUANTITY MEASUREMENT DEVICE
- 13: ARITHMETIC DEVICE
- S: SLAB

## Claims

1. A temperature measurement method comprising:
a spectral measurement step of measuring a spectral radiation spectrum from a slab including at least three or more wavelengths having different spectral emissivity at a same temperature;
an acquisition step of acquiring a feature quantity of a surface of the slab at a measurement point of the spectral radiation spectrum;
a determination step of determining a form of the surface of the slab based on the feature quantity acquired in the acquisition step; and
a selection step of selecting a temperature calculation method for calculating a temperature of the measurement point from the spectral radiation spectrum, measured in the spectral measurement step, based on a result of the determination in the determination step.

2. The temperature measurement method according to claim 1, wherein the feature quantity includes luminance and a shape.

3. A temperature measurement apparatus comprising:
a spectral measurement unit that measures a spectral radiation spectrum from a slab including at least three or more wavelengths having different spectral emissivity at a same temperature;
an acquisition unit that acquires a feature quantity of a surface of the slab at a measurement point of the spectral radiation spectrum; and
an arithmetic device that
determines a form of the surface of the slab based on the feature quantity acquired by the acquisition unit, and
selects a temperature calculation method for calculating a temperature of the measurement point from the spectral radiation spectrum, based on a result of the determination.

4. A temperature control method comprising a step of controlling a temperature of a slab based on a temperature at a measurement point calculated by a temperature calculation method selected by the temperature measurement method according to claim 1 or 2.

5. A temperature control apparatus comprising a unit that controls a temperature of a slab based on a temperature at a measurement point calculated by a temperature calculation method selected by the temperature measurement apparatus according to claim 3.

6. A method for manufacturing a steel material, comprising a step of controlling a temperature of a slab using the temperature control method according to claim 4.

7. A facility for manufacturing a steel material, comprising the temperature control apparatus according to claim 5.
